# EUROPEAN PATENT SPECIFICATION

(11) **EP 2 783 435 B1**
(45) Date of publication and mention of the grant of the patent: **01.03.2017**
(21) Application number: 12852353.7
(22) Date of filing: 23.11.2012
(51) Int. Cl.: H01R 25/00, H01R 13/713, H01H 83/14, H02H 3/16, H01H 71/32, H01H 71/58, H01R 13/70

(54) **SOCKET**
FASSUNG
PRISE DE COURANT

(30) Priority: 24.11.2011 FI 20116176
(43) Date of publication of application: 01.10.2014
(73) Proprietor: Etherma Skandinavia Oy, 01530 Vantaa (FI)
(72) Inventor: JOKELA, Mikko, FI-01530 Vantaa (FI)
(74) Representative: Heinänen Oy Patent Agency
(86) International application number: PCT/FI2012/051163
(87) International publication number: WO 2013/076375

(56) References cited:
- WO-A1-02/058196
- CN-U- 201 562 846
- DE-A1- 3 736 945
- DE-U1- 9 320 529
- US-A- 4 701 733
- US-A- 4 701 733
- US-A1- 2004 070 474
- US-A1- 2007 030 608
- DATABASE WPI Week 201066 Thomson Scientific, London, GB; AN 2010-L76182 XP002743401, -& CN 201 562 846 U (ZHEJIANG CHINT BUILDING ELECTRICS CO LTD) 25 August 2010 (2010-08-25)
- DATABASE WPI Week 201044 Thomson Scientific, London, GB; AN 2010-G63161 XP002743402, -& CN 201 490 502 U (ZHEJIANG CHINT BUILDING ELECTRICS CO LTD) 26 May 2010 (2010-05-26)
- DATABASE WPI Week 200945 Thomson Scientific, London, GB; AN 2009-K88481 XP002743403, -& CN 201 259 989 Y (JI H) 17 June 2009 (2009-06-17)

## Description

### Field of the invention

The present invention relates generally to sockets, and more particularly to duplex residual current device sockets, which comprise two socket parts for two electrical plugs of an electrical device, and in which the socket is provided with an inbuilt residual current device.

### Background of the invention

A socket with a socket-based residual current device (SRCD) is a socket having a residual current device that protects an electrical device connected to it and people in the proximity of it from dangerous electric shocks by causing in a residual current situation the tripping of one or more contacts.

A residual current device operates such that in a normal situation in a single-phase circuit the electric current coming from a phase conductor returns via the neutral conductor to the network. If current is leaking from an electrical conductor or from a device connected to it to outside the device, e.g. via a person in contact with a live part to true earth or to a guard wire, the inbound current and the return current are no longer of equal magnitude. If the difference in the currents increases past a permitted value, the residual current protection disconnects the current. In practice the operation is based on a precise and fast magnetic tripping device (comprising a summation current transformer) or on an electronic supervision circuit and a relay.

A socket with a socket-based residual current device can be surface-mounted, flush-mounted or a furniture socket suited to electrical installation furnishings.

Known in the art are duplex sockets with socket-based residual current devices having two socket parts for two different electrical devices, and fitted inside the socket a residual current device, which disconnects the supply of current from an electrical device connected to the socket if either one of the electrical devices encounters a fault situation, in which the residual current device trips. A problem in prior-art duplex socket-based residual current devices is their large size and more particularly that owing to their large size they are not suited for use in flush-mounted or furnishing installations and consequently not suited, more particularly, for installing inside the simplex mounting box that is commonly used in Europe.

One prior art solution is presented in CN201562846 which describes a permanent-magnet controlled leakage protection socket, which comprises an upper cover assembly, a circuit board assembly and a pedestal assembly, wherein the circuit board assembly is installed between the upper cover and the pedestal, and two symmetrical static contacts are arranged on the circuit board assembly. The circuit board assembly of CN201562846 is provided with a differential transformer and a magnet exciting coil. An iron core assembly is arranged at the central part of the magnet exciting coil, and a pair of moving contacts are also arranged on the iron core assembly. The moving contacts on the moving contacts correspond to the static contacts on a circuit board to form a switch. The moving contacts are connected through a moving contact piece, a soft lead and an input end piece. The static contacts are connected through a static contact piece, a skinned soft lead and an inserting sleeve. The instantaneous release of the on-off between the moving contacts and the static contacts is finished under the coaction of the magnetic field of the magnet exciting coil and the magnetic field of a permanent magnet. Both the keeping of the on-off and the closing between the moving contacts and the static contacts are finished through sucking the iron core by the permanent magnet.

### Summary of the invention

The aim of the present invention is to eliminate the drawbacks of prior art and to achieve an entirely new type of a duplex socket with a socket-based residual current device, which is suited for use in both flush-mounted and furnishing-mounted installations in addition to surface-mounted installations. The socket with the socket-based residual current device according to the invention is typically an earthed duplex Schuko socket.

In the socket with a socket-based residual current device according to the invention a small-sized integrated main switch-trip part of the residual current device provided with a metallic vertical shaft traveling through a trip coil and with a permanent magnet is used, which main switch-trip part is preferably disposed beside the socket parts (which comprise holes and plug connectors for electrical plugs) essentially inside the same face plate with them.

One embodiment of the invention also comprises a selector pushbutton, for the testing mode and reset mode of the residual current switch, disposed beside the socket parts essentially inside the same face plate with them.

In this way an extremely compact construction of the socket according to the invention is achieved, which takes little space, in particular at its bottom part particularly from underneath the electrical socket, and is therefore well suited to flush-mounted installations. By disposing the motherboard for residual current protection in the transverse plane below the connection/connector parts of the socket parts such that the sensor card for residual current protection as well as the higher components required by the electronics of the residual current protection are beside (outside) the connection/connector parts of the electrical socket, a solution is obtained with which it has been possible to replace the corresponding input connectors and output connectors of a normal socket with input connectors and output connectors that are on the motherboard.

With this particular placement solution a sufficiently small depth dimension has been achieved for the device to be used installed inside a flush-mounted box. The socket can be installed flush-mounted into a simplex mounting box either as an individual unit with its own face plate or such that the face plate of the device can also be installed with the frames of a furnishing series.

The characteristic features of the duplex socket according to the invention are described in detail in claim 1 below, and those of its preferred embodiments in the other claims.

The invention is characterized in that the main switch of the residual current device is simultaneously a contact of the residual current protection part, said contact being provided with a trip coil, a shaft going through it, and a permanent magnet and opening in a residual current protection situation.

A preferred embodiment of the invention is characterized in that the switch part functioning as the main switch of the residual current device and provided with a trip coil and a shaft going through it as well as with a permanent magnet is on its own separate circuit board and inside the same face plate with the socket parts of the sockets and above the wall surface.

A preferred embodiment of the invention is characterized in that the switch part functioning as the main switch of the residual current device and provided with a trip coil and a shaft going through it as well as with a permanent magnet is a switch that is on its own circuit board and wired with separate main current wires from the motherboard.

A preferred embodiment of the invention is characterized in that the switch part functioning as the main switch of the residual current device and provided with a trip coil and a shaft going through it as well as with a permanent magnet is a switch that is on its own circuit card and wired with separate main current wires from the switch to the motherboard.

A preferred embodiment of the invention is characterized in that the switch part functioning as the main switch of the residual current device and provided with a trip coil and a shaft going through it as well as with a permanent magnet is a switch that is on its own circuit card and wired with separate wires from the trip coil to the motherboard.

A preferred embodiment of the invention is characterized in that the press switch functioning as the trip pushbutton for the testing mode and reset mode of the residual current protection part is disposed inside the same face plate with the socket parts of the sockets.

A preferred embodiment of the invention is characterized in that below the connection/connector part of the socket is a transversely oriented motherboard comprising a sensor card installed orthogonally with respect to it.

A preferred embodiment of the invention is characterized in that below the connection/connector part of the socket is a motherboard, comprising a sensor card installed orthogonally with respect to it, which is disposed on the motherboard such that it is outside the edge of the connection element of the socket.

A preferred embodiment of the invention is characterized in that below the connection/connector part of the socket is a motherboard, comprising a measuring toroid parallel with respect to it or transverse with respect to the motherboard, which measuring toroid is disposed on the motherboard such that through it, through the space formed between the connection part of the socket and the fixing collar of the whole device, the main current conductors can be taken from the motherboard to the main switch functioning as the actuator of the device.

A preferred embodiment of the invention is characterized in that below the connection/connector part of the socket is a motherboard, in which the input connectors and output connectors of the socket are replaced with input connectors and output connectors installed on the motherboard.

A preferred embodiment of the invention is characterized in that the main switch-trip part also functions as a reset switch and testing switch.

A preferred embodiment of the invention is characterized in that the center axis of the main switch-trip part is arranged with the center axes of the socket parts into an isosceles triangle such that the center axes of the socket parts are the feet of the triangle and the center axis of the main switch-trip part is its pinnacle. A preferred embodiment of the invention is characterized in that the switch part functioning as the main switch of the residual current device and provided with a trip coil and a shaft going through it as well as with a permanent magnet, more particularly the pushbutton of said switch part coming through the face plate of the device, can, as viewed from the top in the direction of the axis of the main switch, be unlimited in its shape.

A preferred embodiment of the invention is characterized in that on the frame part of the trip module of the knob part of the main switch, placed horizontally against the vertical shaft of said knob part, is a LED indicating operation of the device.

A preferred embodiment of the invention is characterized in that on the frame part of the trip module of the knob part of the main switch, placed horizontally against the vertical shaft of said knob part, is a mechanical device-status indication indicating operation of the device.

A preferred embodiment of the invention is characterized in that on the knob part of the main switch, in the direction of its vertical shaft, is a mechanical device-status indication indicating operation of the device.

### Short description of the drawings

In the following, the invention will be described in more detail by the aid of an embodiment with reference to the attached drawings, wherein
Fig. 1 presents a top view of a socket according to the invention,
Fig. 2 presents a side sectional view A-A, and
Fig. 3 a bottom view without the face plate,
Fig. 4 presents another top view of a socket according to the invention,
Fig. 5 presents a version according to Fig. 4 as a side sectional view B-B,
Fig. 6 presents a side sectional view of a main switch according to the invention,
Figs. 7a and 7b present a socket according to Figs. 1 - 3 and 4 - 5 and a second version as side views, and
Fig. 8 presents a top view of a third socket according to the invention, and
Fig. 9 presents a top view of the main switch-trip part of it,
Fig. 10 presents a side sectional view E-E of the main switch-trip part according to Fig. 9, and
Figs. 11 a and 11 b present a socket according to Fig. 8 as a top view and as a side sectional view, section F-F, and
Figs. 12a and 12b present a socket according to Figs. 8 - 9 and a second version of it as side views.

### Description of preferred embodiments of the invention

According to the figures, the invention relates more particularly to duplex earthed so-called Schuko sockets with socket-based residual current devices, which comprise two recessed socket parts 15 for the electrical plugs of two electrical devices, and in which the socket is provided with an inbuilt residual current device based on magnetic tripping.

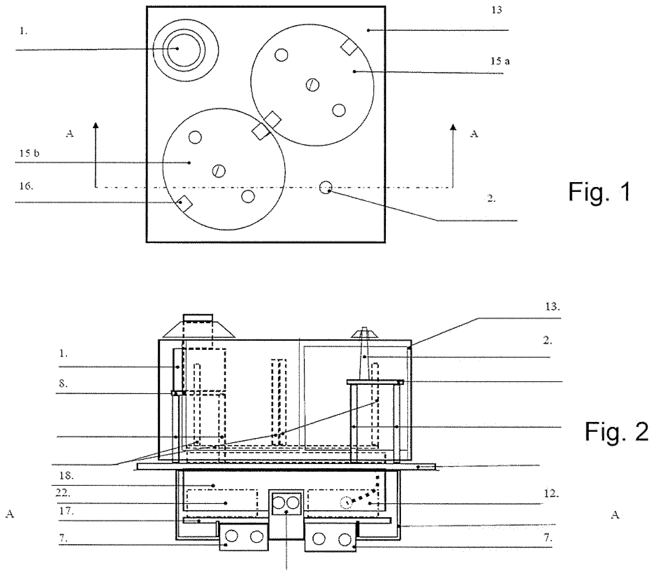

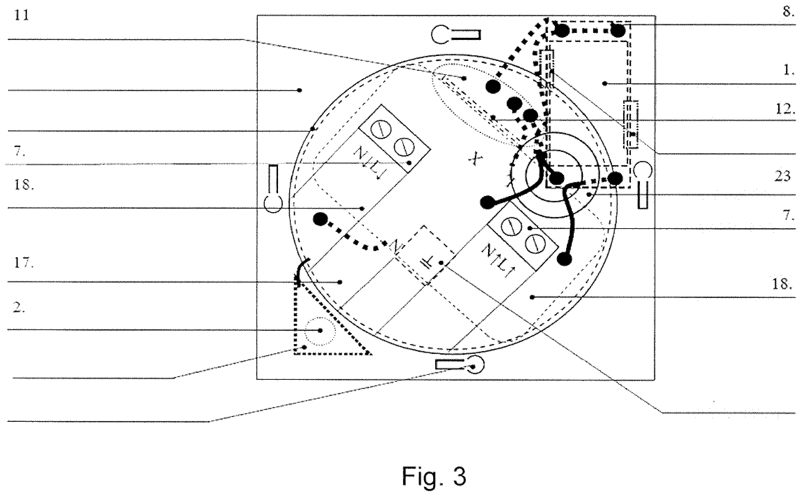

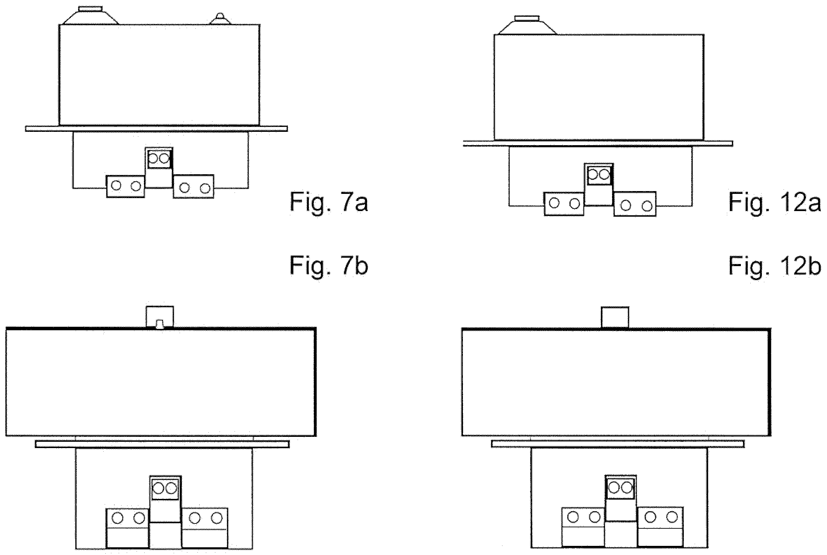

In the socket with a socket-based residual current device according to the invention, according to Figs. 1-3 and 7a, a small-sized main switch-trip part 1 of a residual current device provided with a trip coil and a metallic vertical shaft traveling through it and also with a permanent magnet is used, which main switch-trip part is disposed beside the socket parts (recesses, holes and plug connectors for electrical plugs) 15a and 15b, essentially inside the same face plate 13 with them, in the direction of the vertical axis of the socket.

The socket with the socket-based residual current device according to the invention can also comprise a selector pushbutton 2 for the testing mode and reset mode of the residual current switch to be disposed beside the socket parts, essentially inside the same face plate 13 with them, in the direction of the vertical axis of the socket.

By disposing the motherboard 17 for residual current protection, which circuit card is parallel with the center plate, below the connection/connector part 18 of the socket such that the sensor card 12 for residual current protection as well as the higher components 22 required by the electronics of the residual current protection are outside the connection/connector parts 18 of the socket, a solution is achieved with which it has been possible to replace the corresponding input connectors and output connectors disposed in the connection/connector part 18 of a normal socket with input connectors and output connectors 7 that are on the motherboard 17.

The contact of the main switch 1 of the residual current device is simultaneously a contact that opens in a residual current protection situation.

The switch part 1 functioning as the main switch of the residual current device and provided with a trip coil and a shaft going through it as well as with a permanent magnet is, in Figs. 1 - 3, on its own separate circuit card 8 and inside the same face plate 13 with the socket parts and above the wall surface. Additionally, the switch part 1 is a switch on its own separate circuit card 8 and wired with separate main current wires from the motherboard 17.

Additionally, the switch part 1 is a switch wired with wires from the trip coil to the motherboard 17.

The press switch 2 functioning as the trip pushbutton for the testing mode and reset mode of the residual current protection part is disposed inside the same center plate 13 with the socket parts of the sockets.

Below the connection part of the socket is the motherboard 17, comprising a sensor card 12 installed orthogonally with respect to it, which is disposed on the motherboard such that it is outside the edge of the connection/connector part 18 of the socket, and also a measuring toroid 23 parallel with respect to the motherboard or transverse with respect to the motherboard, which measuring toroid is disposed on the motherboard such that through it, through the space 11 formed between the connection/connector part 18 of the socket and the fixing collar of the whole device, the main current conductors can be taken from the motherboard to the main switch 1 functioning as the actuator of the device.

Further, below the connection parts of the sockets is the motherboard 17, in which the input connectors and output connectors of the connection/connector part 18 of a normal socket are replaced with input connectors and output connectors 7 installed on the motherboard.

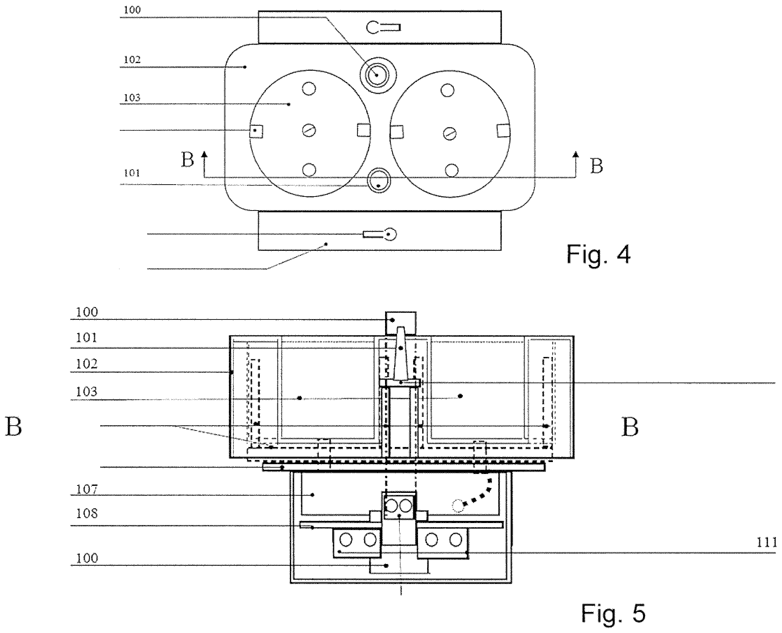

In the parallel version according to Figs. 4, 5 and 7b, the main switch 100 is disposed on the motherboard 108 as essential such that the knob part that is its operating part/pushbutton part is lengthened. This is possible within the framework of space usage when the main switch is partly displaced to the extent of the amount permitted for the edge of the operating part/pushbutton part to be disposed partly below the connection/connector part 107 of the socket. The diameter of the pushbutton part is minimized to correspond to the outer dimensions and tripping force of the shaft and return spring in connection with it. In this way a solution is reached that enables the part of the socket remaining in the mounting box to be formed to be of sufficiently small physical size.

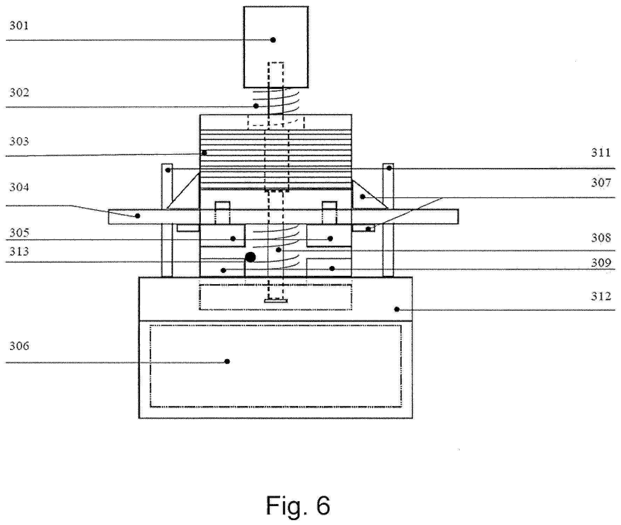

In the cutaway of the main switch presented in Fig. 6, the knob part 301, which is disposed on the top end of the metal shaft 308 of the knob part of the coil, of the main switch is at the very top. Below it is a return spring 302 around the shaft, below the spring is the trip winding 303 and the circuit card 304. On the bottom surface of the circuit card are two contact studs 305 and a base part 312, which is connected to the circuit card with a guide piece limiter/movement limiter 311. Additionally, on top of the base part is a circuit bridge 309, and the return spring 313 of the base part. Inside the base part 312 is a permanent magnet 306.

The main switch operates such that a pushing force is exerted on the knob part 301 of the main switch. As a result of the downward force in the direction of the axis of the main switch the metal shaft 308 of the knob part displaces through the trip winding 303 towards the permanent magnet 306 of the base part. The permanent magnet 306 disposed in the base part 312 of the main switch pulls the base part 312 against the metal shaft 308 of the knob part. After the force acting downwards on the knob part 301 of the main switch, in the direction of the shaft of said knob part, is removed the knob part 301 of the main switch and the metal shaft 308 of the knob part attached to it rise back to their upper position from the force of the return spring 302 at the same time lifiting the base part 312 into its upper position towards the circuit card 304, which is fixed with fasteners 307. A contact between the contact studs 305 on the circuit card 304 and the circuit bridge 309 disposed on the base part 312 forms, remaining in its closed state.

In a residual current situation the metal shaft 308 of the knob part acts as a solenoid, moving upwards in the longitudinal direction of the switch, under the effect of the current coming to the trip winding 303 from the electronics of the residual current protection. The metal shaft 308 of the knob part of the main switch detaches from the permanent magnet 306 and the base part 312 displaces from the effect of the return spring 313 of the base part back to its lower position limited by the guide piece/movement limiter 311 of the base part. The contact between the contact studs 305 on the circuit card 304 and the circuit bridge 309 disposed on the base part 312 opens, remaining in its open state.

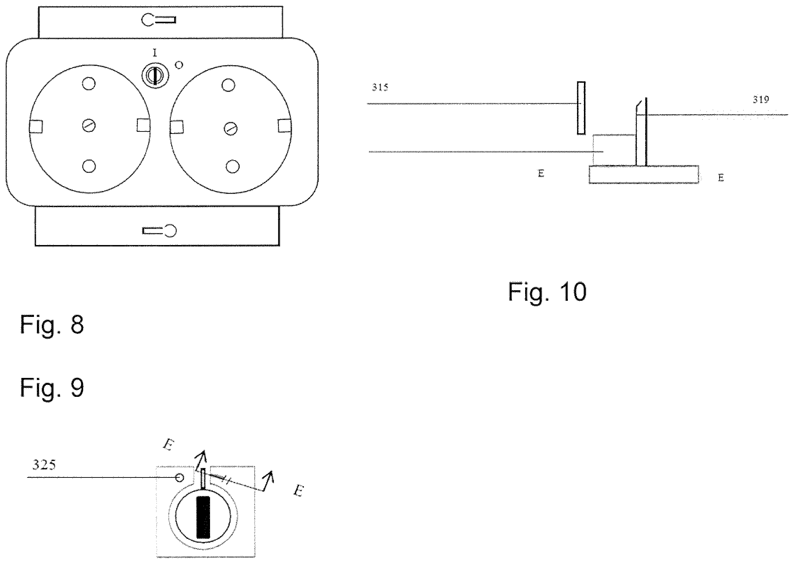

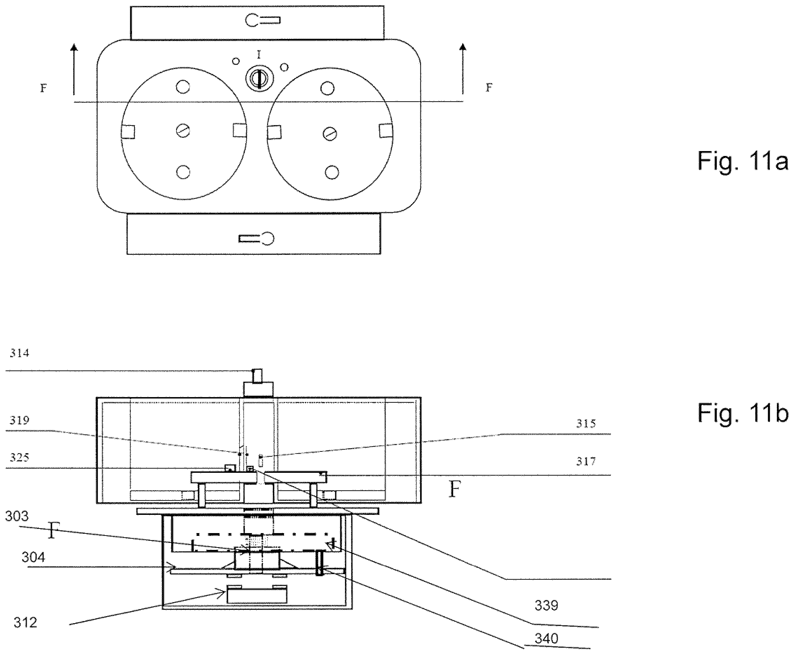

In the embodiment presented in Figs. 8 - 11 the knob part 301 of the switch can be swiveled and it has the positions 0 and I, and the part 314 of the swivel for swiveling it, in which case there is a switch, a test position and a trip position to reset in the same switch. For this purpose the switch has a protrusion 315 on the edge of the knob part. When the switch is in the I-position it can be pressed on; however, when it is in the I-position the knob can be turned to the right from the part 314, in which case the contact 319 bringing the testing and reset state closes when the protrusion 315 of the knob part displaces and closes the contact 319 in question. The residual current device of the device trips and the switch remains in its upper position and does not sink down to its 0-position. The contact of the main switch opens. In this embodiment the frame part 317 of the selector module also comprises a LED 325 indicating that residual current protection is on.

The 0-position and I-position can also be set to be in the opposite sequence. When the knob of the switch is pointing in the I-position, at whatever clock position whatsoever, the 0-position of it can also be a position into which it can be turned counterclockwise from the set I-position.

For example, the 0-position can be at the 12 o'clock point and the I-position is the space to the left or to the right into which it can be turned.

It is obvious to the person skilled in the art that the different embodiments of the invention are not limited solely to the examples described above, but that they may be varied within the scope of the claims presented below. In all the embodiments the vertical center axis of the main switch-trip part and the center axes of the socket parts form an isosceles triangle, in which the center axis of the main switch, i.e. the metal shaft 308, is the pinnacle of the triangle and the center axes of the socket parts its feet, in which case the socket parts in a square-type or rectangular center plate 13 are either on opposite sides of the square or, in the rectangular case, beside each other and beside the main switch 1 as presented above. In a corresponding way the testing and reset trip pushbutton and the center axis of it are disposed on the opposite side of the isosceles triangle according to Fig. 1.

## Claims

1. Duplex socket with a residual current device,
comprising connection parts for the electrical plugs of two electrical devices,
which socket is provided with an inbuilt residual current device (1) based on magnetic tripping and with a summation current transformer (23)
which residual current device (1) comprises a main switch with knob (301), a trip coil (303) and also a permanent magnet (306),
wherein the knob (301) of the main switch is arranged beside the socket parts essentially at the same distance from both socket parts,
which socket can be installed as a flush-mounted or furnishing-mounted installation,
which socket comprises a base part (312) and circuit card (304), and
two recessed socket parts (15a, 15b, 103) of the shape of the counterpart of an electrical plug that are fitted below the top surface of the face plate (13, 102), and the electrical connection parts for two electrical plugs of an electrical device fitted into them,
**characterized in that**
the residual current device is an integrated main switch-trip part (1, 100) provided with a metallic shaft (308) traveling through a trip coil (303) and with a permanent magnet (306) arranged below it,
wherein the metallic shaft (308), the trip coil (303) and the permanent magnet (306) are arranged in such a way that when pushing force is exerted and released on the knob part (301) of the main switch, the permanent magnet is arranged to lift the base part (312) into its upper position towards the circuit card (304) and thus to form a contact between contact studs (305) on the circuit card (304) and a circuit bridge (309) disposed on the base part (312), and
in a residual current situation the metallic shaft (308) is arranged to act as a solenoid under the effect of the current coming to the trip coil (303) from the electronics of the residual current protection, and to move upwards in the longitudinal direction of the switch and to detach from the permanent magnet (306) in which case the base part (312) is arranged to be displaced from the effect of a return spring of the base part (313) back to its lower position and thus to open the contact between the contact studs (305) on the circuit card (304) and the circuit bridge (309),
and wherein the center axis (308) of the main switch-trip part is arranged with the center axes of the socket parts (15a, 15b, 103) into an isosceles triangle such that the center axes of the socket parts are the feet of the triangle and the center axis (308) of the main switch-trip part is its pinnacle.

2. Socket according to claim 1, **characterized in that** the main switch is on a motherboard (17, 108) arranged below the socket parts such that the knob part of it is arranged beside the socket parts on the end of an extension pillar.

3. Socket according to any of the preceding claims, **characterized in that** the selector pushbutton (2, 101) for the testing mode and reset mode of the residual current switch is disposed beside the socket parts essentially inside the same face plate (13, 102) with them.

4. Socket according to any of the preceding claims, **characterized in that** the motherboard circuit card (17, 108) for residual current protection is arranged in the transverse plane below the connection/connector parts (18) of the socket parts (103) such that the sensor card (12) for residual current protection as well as the higher components required by the electronics of the residual current protection are beside connection/connector parts of the electrical socket, and **in that** the input connectors and output connectors (18, 111) of the socket are arranged on the motherboard circuit card (17, 108).

5. Socket according to any of the preceding claims, **characterized in that** the switch part functioning as the main switch (1, 100) of the residual current device and provided with a trip coil and a shaft going through it as well as with a permanent magnet, is on its own separate circuit card and inside the same center plate with the socket parts of the socket and under the wall surface.

6. Socket according to any of the preceding claims, **characterized in that** the switch part functioning as the main switch of the residual current device and provided with a trip coil and a shaft going through it as well as with a permanent magnet is a switch on its own circuit card and
- wired with separate main current wires from the motherboard,
- wired with separate main current wires from the switch to the motherboard or
- wired with separate wires from the trip coil to the motherboard.

7. Socket according to any of the preceding claims, **characterized in that** below the connection/connector part of the socket is a transversely oriented motherboard comprising a sensor card (12) installed orthogonally with respect to it, which is preferably disposed on the motherboard such that it is outside the edge of the connection element of the socket.

8. Socket according to any of the preceding claims, **characterized in that** below the connection/connector part of the socket is a motherboard, comprising a measuring toroid (23) parallel with respect to it or transverse with respect to the motherboard, which is disposed on the motherboard such that through it, through the space formed between the connection part of the socket and the fixing collar of the whole device, the main current conductors can be taken from the motherboard to the main switch functioning as the actuator of the device.

9. Socket according to claim 1, **characterized in that** the main switch-trip part also functions as a reset switch and testing switch.

10. Socket according to any of the preceding claims, **characterized in that** on the frame part of the trip module of the knob part of the main switch, placed horizontally against the vertical shaft of the knob part, is a LED indicating the operation of the device.

11. Socket according to any of the preceding claims, **characterized in that** on the frame part of the trip module of the knob part of the main switch, placed horizontally against the vertical shaft of the knob part, is a mechanical device-status indication indicating the operation of the device.

12. Socket according to any of the preceding claims, **characterized in that** on the knob part of the main switch, in the direction of its vertical shaft, is a mechanical device-status indication indicating the operation of the device.

13. Socket according to any of the preceding claims, **characterized in that** the input connectors and output connectors (18, 111) of the socket are arranged on the motherboard circuit card (17, 108), in which case the output connectors (18, 111) of the socket are in the residual current protection circuit and other corresponding series-connected sockets connected to these output connectors are residual current protected.

14. Socket according to any of the preceding claims, **characterized in that** through the bottom surface of the cover part of the connection/connector part of the socket from the metallic live, zero and earth bars (339) that are inside the connection/connector part (18) of the socket are plug connectors (340) to be soldered directly to the motherboard (17, 108), into the holes corresponding to them.

15. Socket according to any of the preceding claims, **characterized in that** the selector pushbutton (2, 101) for the testing mode and reset mode of the residual current switch is arranged on the motherboard (17, 108) arranged below the socket parts such that the knob part of it is arranged beside the socket parts on the end of an extension pillar.

## Patentansprüche

1. Zweifach-Steckdose mit einer Fehlerstromschutzvorrichtung,
aufweisend Verbindungsteile für die elektrischen Stecker von zwei elektrischen Geräten,
wobei die Steckdose mit einer eingebauten Fehlerstromschutzvorrichtung (1) basierend auf magnetischem Auslösen und mit einem Summenstromwandler (23) ausgerüstet ist,
wobei die Fehlerstromschutzvorrichtung (1) einen Hauptschalter mit Knopf (301), eine Auslösespule (303) und auch einen Permanentmagneten (306) aufweist,
wobei der Knopf (301) des Hauptschalters neben den Steckdosenteilen im Wesentlichen in dem gleichen Abstand von beiden Steckdosenteilen angeordnet ist,
wobei die Steckdose als eine Unterputz- oder Aufputz-Installation installiert sein kann,
wobei die Steckdose aufweist
ein Basisteil (312) und eine Schaltkreisplatte (304), und zwei vertiefte Steckdosenteile (15a, 15b, 103) in der Form des Gegenstücks eines elektrischen Steckers, die unter der Frontfläche der Frontplatte (13, 102) eingebaut sind, und in diese eingebaut die elektrischen Verbindungsteile für zwei elektrische Stecker eines elektrischen Geräts,
**dadurch gekennzeichnet, dass**
die Fehlerstromschutzvorrichtung ein integriertes Hauptschalterauslöseteil (1, 100) ausgestattet mit einem metallischen Schaft (308) ist, der sich durch eine Auslösespule (303) erstreckt, und mit einem Permanentmagneten (306), der darunter angeordnet ist,
wobei der metallische Schaft (308), die Auslösespule (303) und der Permanentmagnet (306) in einer solchen Weise angeordnet sind, dass wenn eine Druckkraft auf den Knopfteil (301) des Hauptschalters ausgeübt und nachgelassen wird, der Permanentmagnet angeordnet ist, das Basisteil (312) in seine obere Position zu der Schaltkreisplatte (304) zu heben und daher einen Kontakt zwischen Kontaktteilen (305) auf der Schaltkreisplatte (304) und einer Schaltkreisbrücke (309), die auf dem Basisteil (312) angeordnet ist, zu bilden, und
wobei in einer Fehlerstromsituation der metallische Schaft (308) angeordnet ist, unter dem Einfluss des Stroms, der zu der Auslösespule (303) von der Elektronik des Fehlerstromschutzes kommt, als ein Magnet zu wirken
und sich aufwärts in die Längsrichtung des Schalters zu bewegen und sich von dem Permanentmagneten (306) zu entfernen, in welchem Fall das Basisteil (312) angeordnet ist, aufgrund der Wirkung einer Rückstellfeder des Basisteils (312) zurück zu seiner unteren Position verlagert zu werden und daher den Kontakt zwischen den Kontaktteilen (305) auf der Schaltkreisplatte (304) und der Schaltkreisbrücke (309) zu öffnen,
und wobei die Mittelachse (308) des Hauptschaltauslöseteils mit der Mittelachse der Steckdosenteile (15a, 15b, 103) in einem gleichschenkligen Dreieck angeordnet ist, so dass die Mittelachse der Steckdosenteile die Füße des Dreiecks und die Mittelachse (308) des Hauptschalterauslöseteils seine Spitze ist.

2. Steckdose nach Anspruch 1, **dadurch gekennzeichnet, dass** der Hauptschalter auf einer Hauptplatine (17, 108) ist, die unter den Steckdosenteilen angeordnet ist, so dass der Knopfteil neben den Steckdosenteilen an einem Ende einer Verlängerungsstütze angeordnet ist.

3. Steckdose nach einem der vorhergehenden Ansprüche
**dadurch gekennzeichnet, dass** die Auswahltaste (2, 101) für den Testmodus und den Zurücksetzungsmodus des Fehlerstromschalters neben den Steckdosenteilen im Wesentlichen in derselben Frontplatte (13, 102) mit diesen angeordnet ist.

4. Steckdose nach einem der vorhergehenden Ansprüche
**dadurch gekennzeichnet, dass** die Schaltkreisplatte (17, 108) der Hauptplatine zum Fehlerstromschutz in der Querebene unter den Verbindungs-/Verbinderteilen (18) der Steckdosenteile (103) angeordnet ist, so dass die Sensorplatte (12) für den Fehlerstromschutz sowie die höheren Komponenten, die von der Elektronik des Fehlerstromschutzes benötigt werden, neben Verbindungs-/Verbinderteilen der elektrischen Steckdose sind und dadurch, dass die Eingangsverbinder und die Ausgangsverbinder (18, 111) der Steckdose auf der Schaltkreisplatte (17, 108) der Hauptplatine angeordnet sind.

5. Steckdose nach einem der vorhergehenden Ansprüche
**dadurch gekennzeichnet, dass** der Schalterteil, der als der Hauptschalter (1, 100) der Fehlerstromschutzvorrichtung arbeitet und mit einer Auslösespule und einem sich dadurch erstreckenden Schaft und mit einem Permanentmagneten ausgestattet ist, auf seiner eigenen Schaltkreisplatte und innerhalb derselben Zentralplatte den Steckdosenteile der Steckdose und unter der Wandoberfläche ist.

6. Steckdose nach einem der vorhergehenden Ansprüche,
**dadurch gekennzeichnet, dass** der Schalterteil, der als der Hauptschalter der Fehlerstromschutzvorrichtung arbeitet und mit einer Auslösespule und einem sich dadurch erstreckenden Schaft und mit einem Permanentmagneten ausgestattet ist, ein Schalter auf seiner eigenen Schaltkreisplatte ist und
- mit gesonderten Hauptstromleitungen von der Hauptplatine verdrahtet ist,
- mit gesonderten Hauptstromleitungen von dem Schalter bis zu der Hauptplatine verdrahtet ist oder
- mit gesonderten Leitungen von der Auslösespule zu der Hauptplatine verdrahtet ist.

7. Steckdose nach einem der vorhergehenden Ansprüche,
**dadurch gekennzeichnet, dass** unter dem Verbindungs-/Verbinderteil der Steckdose eine quer orientierte Hauptplatine ist, die eine Sensorplatte (12) aufweist, die orthogonal dazu installiert ist, welche Vorzugsweise auf der Hauptplatine angeordnet ist, so dass sie außerhalb der Kante des Verbindungselements der Steckdose ist.

8. Steckdose nach einem der vorhergehenden Ansprüche
**dadurch gekennzeichnet, dass** unter dem Verbindungs-/Verbinderteil der Steckdose eine Hauptplatine ist, die einen Messtoroid (23) aufweist, der parallel zu ihr oder quer zu der Hauptplatine ist, der auf der Hauptplatine angeordnet ist, so dass durch diesen, durch den Raum der zwischen den Verbindungsteilen der Steckdose gebildet ist und dem Befestigungskragen der gesamten Vorrichtung die Hauptstromleiter von der Hauptplatine zu dem Hauptschalter genommen werden können, der als der Aktuator der Vorrichtung arbeitet.

9. Steckdose nach Anspruch 1, **dadurch gekennzeichnet, dass** der Hauptschalterauslöseteil auch als ein Zurücksetzungsschalter und ein Testschalter arbeitet.

10. Steckdose nach einem der vorhergehenden Ansprüche, **dadurch gekennzeichnet, dass** auf dem Rahmenteil des Auslösemoduls des Knopfteils des Hauptschalters, horizontal gegen den vertikalen Schaft des Knopfteils platziert eine LED ist, die den Betrieb der Vorrichtung anzeigt.

11. Steckdose nach einem der vorhergehenden Ansprüche, **dadurch gekennzeichnet, dass** auf dem Rahmenteil des Auslösemoduls des Knopfteils des Hauptschalters, horizontal gegen den vertikalen Schaft des Knopfteils platziert eine mechanische Vorrichtungsstatusanzeige ist, die den Betrieb der Vorrichtung anzeigt.

12. Steckdose nach einem der vorhergehenden Ansprüche, **dadurch gekennzeichnet, dass** der Knopfteil des Hauptschalters in der Richtung seines vertikalen Schaftes eine mechanische Vorrichtungsstatusanzeige ist, die den Betrieb der Vorrichtung anzeigt.

13. Steckdose nach einem der vorhergehenden Ansprüche, **dadurch gekennzeichnet, dass** die Eingangsverbinder und die Ausgangsverbinder (18, 111) der Steckdose auf der Hauptplatinenschaltkreisplatte (17, 108) angeordnet sind, in welchem Fall die Ausgangsverbinder (18, 111) der Steckdose in dem Fehlerstromschutzschaltkreis sind und andere dazugehörige in Reihe verbundenen Steckdosen, die mit diesen Ausgangsverbindern verbunden sind, fehlerstromgeschützt sind.

14. Steckdose nach einem der vorhergehenden Ansprüche, **dadurch gekennzeichnet, dass** durch die untere Oberfläche des Abdeckteils des Verbindungs-/Verbinderteils der Steckdose Steckverbinder von den metallischen Phase -, Neutral- und Erdkontakten (339), die innerhalb des Verbindungs-/Verbinderteils (18) der Steckdose sind, direkt an die Hauptplatine (17, 108) in zu diesen gehörige Löcher gelötet werden sollen.

15. Steckdose nach einem der vorhergehenden Ansprüche, **dadurch gekennzeichnet, dass** die Auswahltaste (2, 101) für den Testmodus und den Zurücksetzungsmodus der Fehlerstromschutzvorrichtung auf der Hauptplatine (17, 108) angeordnet ist, die unter den Steckdosenteilen angeordnet ist, so dass der Knopfteil von dieser neben den Steckdosenteilen an dem Ende einer Verlängerungsstütze angeordnet ist.

## Revendications

1. Double prise de courant dotée d'un dispositif à courants résiduels,
comprenant des parties de connexion destinées aux fiches électriques de deux dispositifs électriques,
laquelle prise de courant est pourvue d'un dispositif à courants résiduels intégré (1) fondé sur un déclenchement magnétique et d'un transformateur de courant de sommation (23)
lequel dispositif à courants résiduels (1) comprend un commutateur principal doté d'un bouton (301), d'une bobine de déclenchement (303) ainsi que d'un aimant permanent (306),
dans laquelle le bouton (301) du commutateur principal est placé à côté des parties prises de courant, sensiblement à la même distance des deux parties prises de courant,
laquelle prise de courant peut être installée sous la forme d'une installation encastrée ou montée sur un meuble,
laquelle prise de courant comprend
une partie base (312) et une carte de circuit imprimé (304), et
deux parties évidées formant prises de courant (15a, 15b, 103) qui ont la forme de l'homologue d'une fiche électrique et qui sont montées sous la surface supérieure de la plaque avant (13, 102), et les parties de connexion électrique destinées à deux fiches électriques d'un dispositif électrique qui y sont insérées,
**caractérisée en ce que**
le dispositif à courants résiduels est une partie intégrée de déclenchement de commutateur principal (1, 100) pourvue d'un axe métallique (308) se déplaçant à travers une bobine de déclenchement (303) et d'un aimant permanent (306) placé au-dessous de cet axe,
dans laquelle l'axe métallique (308), la bobine de déclenchement (303) et l'aimant permanent (306) sont conçus de manière que lorsqu'une pression est exercée et relâchée sur la partie bouton (301) du commutateur principal, l'aimant permanent est conçu pour soulever la partie base (312) vers sa position supérieure en direction de la carte de circuit imprimé (304) et établir ainsi un contact entre des plots de contact (305) de la carte de circuit imprimé (304) et un circuit en pont (309) disposé sur la partie base (312), et
en présence de courants résiduels, l'axe métallique (308) est conçu pour agir comme un solénoïde sous l'effet du courant parvenant à la bobine de déclenchement (303) en provenance des circuits électroniques du dispositif de protection contre les courants résiduels, et pour se déplacer vers le haut, dans le sens longitudinal du commutateur et se détacher de l'aimant permanent (306), auquel cas la partie base (312) est conçue pour être ramenée, sous l'effet d'un ressort de rappel de la partie base (313), à sa position inférieure et pour ouvrir ainsi le contact entre les plots de contact (305) de la carte de circuit imprimé (304) et le circuit en pont (309),
et dans laquelle l'axe central (308) de la partie de déclenchement de commutateur principal est placée avec les axes centraux des parties prises de courant (15a, 15b, 103) de manière à former un triangle isocèle, de telle sorte que les axes centraux des parties prises de courant soient les jambes du triangle et l'axe central (308) de la partie de déclenchement de commutateur principal en soit le sommet.

2. Prise de courant selon la revendication 1, **caractérisée en ce que** le commutateur principal se trouve sur une carte mère (17, 108) placée sous les parties prises de courant, de manière que sa partie bouton soit placée à côté des parties prises de courant à l'extrémité d'un montant de rallonge.

3. Prise de courant selon l'une quelconque des revendications précédentes, **caractérisée en ce que** le bouton poussoir de sélecteur (2, 101) du mode de test et du mode de remise à l'état initial du commutateur à courants résiduels est disposé à côté des parties prises de courant, sensiblement à l'intérieur de la même plaque avant (13, 102) que celles-ci.

4. Prise de courant selon l'une quelconque des revendications précédentes, **caractérisée en ce que** la carte de circuit imprimé formant carte mère (17, 108) du dispositif de protection contre les courants résiduels est placée dans le plan transversal sous les parties de connexion/connecteur (18) des parties prises de courant (103), de manière que la carte de capteur (12) destinée au dispositif de protection contre les courants résiduels ainsi que les composants supérieurs requis par les circuits électroniques du dispositif de protection contre les courants résiduels se trouvent à côté des parties de connexion/connecteurs de la prise de courant électrique, et **en ce que** les connecteurs d'entrée et les connecteurs de sortie (18, 111) de la prise de courant sont placés sur la carte de circuit imprimé formant carte mère (17, 108).

5. Prise de courant selon l'une quelconque des revendications précédentes, **caractérisée en ce que** la partie commutateur faisant office de commutateur principal (1, 100) du dispositif à courants résiduels et pourvue d'une bobine de déclenchement et d'un axe la traversant, ainsi que d'un aimant permanent, se trouve sur sa propre carte de circuit imprimé séparée et à l'intérieur de la même plaque centrale que les parties prises de courant de la prise de courant et sous la surface murale.

6. Prise de courant selon l'une quelconque des revendications précédentes, **caractérisée en ce que** la partie commutateur faisant office de commutateur principal du dispositif à courants résiduels et pourvue d'une bobine de déclenchement et d'un axe la traversant, ainsi que d'un aimant permanent, est un commutateur sur sa propre carte de circuit imprimé et est
- câblé avec des fils de courant principal séparés, depuis la carte mère,
- câblé avec des fils de courant principal séparés, du commutateur à la carte mère, ou
- câblé avec des fils séparés, de la bobine de déclenchement à la carte mère.

7. Prise de courant selon l'une quelconque des revendications précédentes, **caractérisée en ce que** sous la partie de connexion/connecteur de la prise de courant se trouve une carte mère orientée transversalement, comprenant une carte de capteur (12) installée perpendiculairement à celle-ci, qui est disposée de préférence sur la carte mère, de manière à se trouver à l'extérieur du bord de l'élément de connexion de la prise de courant.

8. Prise de courant selon l'une quelconque des revendications précédentes, **caractérisée en ce que** sous la partie de connexion/connecteur de la prise de courant se trouve une carte mère comprenant un tore de mesure (23) parallèle à celle-ci ou transversal par rapport à la carte mère, qui est disposé sur la carte mère, de manière qu'à travers celui-ci, à travers l'espace formé entre la partie de connexion de la prise de courant et le collier de fixation de l'ensemble du dispositif, les conducteurs de courant principal puissent être menés de la carte mère au commutateur principal faisant office d'actionneur du dispositif.

9. Prise de courant selon la revendication 1, **caractérisée en ce que** la partie de déclenchement de commutateur principal fait également office de commutateur de remise à l'état initial et de commutateur de test.

10. Prise de courant selon l'une quelconque des revendications précédentes, **caractérisée en ce que** sur la partie cadre du module de déclenchement de la partie bouton du commutateur principal, se trouve, placée horizontalement contre l'axe vertical de la partie bouton, une diode électroluminescente indiquant le fonctionnement du dispositif.

11. Prise de courant selon l'une quelconque des revendications précédentes, **caractérisée en ce que** sur la partie cadre du module de déclenchement de la partie bouton du commutateur principal, se trouve, placé horizontalement contre l'axe vertical de la partie bouton, un indicateur mécanique d'état de dispositif indiquant le fonctionnement du dispositif.

12. Prise de courant selon l'une quelconque des revendications précédentes, **caractérisée en ce que** sur la partie bouton du commutateur principal, dans la direction de son axe vertical, se trouve un indicateur mécanique d'état de dispositif indiquant le fonctionnement du dispositif.

13. Prise de courant selon l'une quelconque des revendications précédentes, **caractérisée en ce que** les connecteurs d'entrée et les connecteurs de sortie (18, 111) de la prise de courant sont placés sur la carte de circuit imprimé formant carte mère (17, 108), auquel cas les connecteurs de sortie (18, 111) de la prise de courant se trouvent sur le circuit de protection contre les courants résiduels et d'autres prises de courant correspondantes montées en série, connectées à ces connecteurs de sortie sont protégées contre les courants résiduels.

14. Prise de courant selon l'une quelconque des revendications précédentes, **caractérisée en ce qu'**à travers la surface inférieure de la partie couvercle de la partie de connexion/connecteur de la prise de courant, à partir des collecteurs métalliques sous tension, neutre et de terre (339) qui se trouvent à l'intérieur de la partie de connexion/connecteur (18) de la prise de courant se trouvent des connecteurs mâles (340) à souder directement à la carte mère (17, 108), dans les trous leur correspondant.

15. Prise de courant selon l'une quelconque des revendications précédentes, **caractérisée en ce que** le bouton poussoir de sélecteur (2, 101) du mode de test et du mode de remise à l'état initial du commutateur à courants résiduels est placé sur la carte mère (17, 108) placée sous les parties prises de courant, de manière que sa partie bouton soit placée à côté des parties prises de courant à l'extrémité d'un montant de rallonge.
